# EUROPEAN PATENT APPLICATION

(11) **EP 2 336 376 A1**
(43) Veröffentlichungstag der Anmeldung: **22.06.2011**
(21) Anmeldenummer: 09816505.3
(22) Anmeldetag: 08.09.2009
(51) Int. Cl.: C22B 11/00, C22B 1/04, C22B 3/10

(54) **VERFAHREN ZUR VERARBEITUNG MINERALISCHER ROHMATERIALIEN**

(30) Priorität: 29.09.2008 RU 2008138738
(71) Anmelder: Zakrytoe Akcionernoe Obshestvo "Uralkaliy Technologiya", Permsky Krai 618426 (RU)
(72) Erfinder: SINEGRIBOV, Viktor Andreevich, Moscow 125413 (RU); SMETANNIKOV, Andrei Filippovich, Perm 614061 (RU); SINEGRIBOVA, Oksana Afanasievna, Moscow 125445 (RU); NOVIKOV, Pavel Yurievich, Moscow 121471 (RU); ANTYUFEEV, Mikhail Aleksandrovich, Chelyabinskaya obl. 456750 (RU); KRASNOSHTEIN, Arkadiy Evgenievich, Perm 614039 (RU)
(74) Vertreter: Jeck, Anton
(86) Internationale Anmeldenummer: PCT/RU2009/000458
(87) Internationale Veröffentlichungsnummer: WO 2010/036144

(57) **Zusammenfassung**

Die Erfindung betrifft ein Verfahren zur Verarbeitung von mineralischen Rohstoffen, welche Edelmetalle und Chloride von Alkalimetallen enthalten, einschließlich ihrer Aufbereitung und ihres Röstens. Sieht man vor, dass die Verarbeitung des Abbrands in zwei Schritten durchgeführt wird, wobei im ersten Schritt eine sekundäre Aufbereitung mittels einer Wasserwäsche im Verhältnis von Feststoff : Flüssigkeit = 1 : 0,7 - 2,5 vorgenommen wird und wobei im zweiten Schritt der abgewaschene Abbrand durch Salzsäure im Verhältnis von Feststoff : Flüssigkeit = 1 : 2 - 3 ausgelaugt wird, dann wird erreicht, dass das Verhältnis Feststoff : Flüssigkeit bei der Auslaugung des Abbrands verkleinert und der Aufwand der für die Auslaugungs- und Sorptionsvorgänge benötigten Ausrüstungen reduziert werden kann.

## Beschreibung

Die Erfindung betrifft ein Verfahren zur Verarbeitung von mineralischen Rohstoffen nach dem Oberbegriff des Anspruchs.

Die Erfindung kann zur Ausbringung von Edelmetallen (Platin, Palladium, Gold usw.) aus verschiedenen Arten von mineralischen Rohstoffen eingesetzt werden, welche Chloride der Alkali- und Erdalkalimetalle aufweisen. Zu solchen mineralischen Rohstoffen zählen z. B. Schlämme der Kaliwerke.

Aus dem Handbuch "Verfahrenstechnische Auswertung von mineralischen Rohstoffen" (herausgegeben von Doktoringenieur P.E. Ostapenk, Moskau, Verlag NEDRA 1990, S. 98) ist ein Verfahren zur Verarbeitung von mineralischen Rohstoffen bekannt. Dieses Verfahren umfasst den Vorgang zur Erzaufbereitung mittels Desintegration (Auflockerung, Dispergierung) des Tonguts, welches Bestandteil dieser Erze ist. Die Aufbereitung kann unter Einsatz von nur Wasser oder von Wasser und mechanischer Einwirkung einer Einrichtung oder Wasser und Druckluft erfolgen, wobei anschließend der dispergierte Teil in Form von Schlämmen entfernt wird. Die Schlämme enthalten den im Wasser dispergierten Ton und feine Erzteilchen. Nach der Abscheidung der Schlämme stellt das gewaschene Produkt ein Schüttgut dar. Es besteht aus Erz- und Nichterzmineralkörnern. Als Abwaschen wird dabei der Vorgang zur Erzaufbereitung genannt. Dem Abwaschen werden Manganerze, Brauneisenerze, Chromerze und andere ausgesetzt.

Der Nachteil dieses Verfahrens ist die Unmöglichkeit der Ausbringung von Palladium und Silber.

Aus dem Patent RU 2132398 (veröffentlicht am 27.06.1999) ist ein Verfahren zur Verarbeitung von Schlämmen der Kaliwerke bekannt. Nach diesem Verfahren wird das Abwaschen von goldhaltigen Schlämmen zur Salzentfernung vorgenommen. Das beim Abwaschen abgeschiedene Wasser wird entfernt. Die Schlämme werden mit Süßwasser ergänzt. Durch die dadurch gebildete Trübe wird Chlorgas durchgelassen. Dabei wird die Chlorierung so vorgenommen, dass die Konzentration von aktivem Chlor in der Auslaugungslösung im Bereich von 0,3 - 2,0 g/l variiert. Nach dem Abschluss der Auslaugung wird die Ausbringung von Gold mittels Sorption ausgeführt.

Der Mangel dieses Verfahrens besteht darin, dass dafür ein sorgfältiges Abwaschen der Chloride und der Einsatz von sehr starkem Giftstoff - elementarem Chlor - zur Goldausbringung unbedingt erforderlich sind. Ein weiterer Mangel dieses Verfahrens besteht darin, dass es die Ausbringung von Palladium und Silber nicht ermöglicht.

Der nächste Stand der Technik gegenüber der Erfindung ihrem technischen Wesen nach ist ein Verfahren zur Ausbringung von Edelmetallen aus Mineralrohstoffen, das im Patent RU 2291907 (veröffentlicht 2006.01) offenbart ist. Gemäß diesem Verfahren werden aus Mineralrohstoffen die überflüssigen Chloride ausgewaschen, bis ihr Anteil in dem zu behandelnden Material 7 bis 13 % beträgt. Die Trübe wird verdickt. Das verdickte Produkt wird getrocknet und bei einer Temperatur von 600 - 700 °C geröstet. Danach werden die Edelmetalle aus dem Abbrand mit einer verdünnten Königswasserlösung ausgelaugt und somit die Edelmetalle aus der erzeugten Trübe sorbiert.

Der Mangel dieses Verfahrens besteht im Folgenden. Die Palladiumverbindungen sind ziemlich gut auflösbar. Um Palladiumverluste zusammen mit Spüllösungen wegen dieser Lösbarkeit zu vermeiden, muss der Verfahrensschritt des Chloridabwaschens ausgeschlossen (gestrichen) werden. Dadurch macht sich eine andere Verarbeitung von mineralischen Rohstoffen mit hohem Anteil an Chloriden der Alkali-und Erdalkalimetalle erforderlich. Diese müssen aufgelöst werden, um die Ausbringung der Edelmetalle sicherzustellen. Im Endeffekt muss für die Auslaugung der Abbrände ein hohes Verhältnis von festen zu flüssigen Stoffen (Feststoff : Flüssigkeit) eingesetzt werden, um eine Kühlkristallisation der Chloride (bei der Abkühlung der Lösungen) zu vermeiden. Folglich nimmt der Umfang der benötigten Ausrüstungen für die Auslaugungs- und nachfolgende Sorptionsvorgänge der Metalle bei ihrer Ausscheidung aus dem Trüben wesentlich zu.

Es ist Aufgabe der Erfindung, diese Mängel beim neuen Verfahren zu beseitigen.

Die gestellte Aufgabe wird durch die Merkmale des Anspruchs gelöst.

Das durch das neue Verfahren erreichte technische Ergebnis besteht in einer Verringerung der Menge von den bei der Auslaugung erzeugten Trüben. Dementsprechend wird auch die Menge der für ihre Verarbeitung benötigten Hydrometallurgie-Ausrüstungen verringert. Darüber hinaus nimmt der Anteil der ausgebrachten Edelmetalle zu, während ein beachtlicher Teil des mit den Schlämmen abgehenden Kaliumchlorids für die Produktion zurück gewonnen wird.

Das genannte technische Ergebnis wird in folgender Weise erreicht:

Das Verfahren zur Verarbeitung von mineralischen Rohstoffen, die Edelmetalle und Chloride von Alkalimetallen enthalten, schließt folgende Verfahrensschritte ein: Aufbereitung und Rösten. Die Verarbeitung des Abbrands wird in zwei Stufen durchgeführt und zwar eine sekundäre Aufbereitung mittels einer Wasserwäsche bei einem Verhältnis von Feststoff : Flüssigkeit = 1 : 0,7 - 2,5. Danach wird der abgewaschene Abbrand mit Salzsäure im Verhältnis von Feststoff : Flüssigkeit = 1 : 2 - 3 ausgelaugt.

Das kennzeichnende Merkmal des neuen Verfahrens gegenüber dem nächsten Stand der Technik besteht darin, dass die Abbrandverarbeitung in zwei Schritten erfolgt. Zuerst wird die sekundäre Aufbereitung mittels einer Wasserwäsche im Verhältnis von Feststoff : Flüssigkeit = 1 : 0,7 - 2,5 vorgenommen. Anschließend wird der gewaschene Abbrand mit Salzsäure im Verhältnis von Feststoff : Flüssigkeit = 1 : 2 - 3 ausgelaugt.

### Das Verfahren wird in folgender Weise ausgeführt:

Die Granulate werden nach dem Rösten aus dem Ofen in einen Behälter mit Wasser umgeladen. Je nach Chloridanteil variiert das Verhältnis Feststoff : Flüssigkeit im Bereich von 1 : 0,7 bis 1 : 2,5. Dabei werden die Chloride der Alkali- und Erdalkalimetalle gelöst. Danach wird der abgewaschene Abbrand mittels Salzsäure im Verhältnis von Feststoff : Flüssigkeit = 1 : 2 - 3 ausgelaugt. Letztendlich werden die Edelmetalle aus der damit hergestellten Trübe sorbiert.

### Beispiel 1

Die Charge des unlöslichen Rückstands wurde in 5 Teile aufgeteilt. Die Chloride wurden aus diesen Teilen in unterschiedlichem Maße ausgewaschen. Danach wurde jedes Probestück aus dem unlöslichen Rückstand von der überflüssigen Lösung getrennt und anschließend geröstet. Aus den hergestellten Abbränden wurden die Edelmetalle ausgebracht (Tabelle 1).

**Tabelle 1**

| | | | | |
|---|---|---|---|---|
| Auslaugung der Abbrände mittels einer Mischung von HCl + HNO₃ | | | | |
| | | | Abbrandgröße - 2 mm | |
| | | | Kennwerte der Auslaugung: | |
| | | | Feststoff : Flüssigkeit =1 : 4 | |
| | | | Temperatur-90 °C | |
| | | | Zeitdauer - 4 Stunden | |

| Cl-Anteil, % | Ausgebracht, g/t des entsalzten unlöslichen Rückstands | | | |
|---|---|---|---|---|
| | Pd | Pt | Au | Ag |
| 11,8 | 1,71 | 0,17 | 0,06 | 0,72 |
| 14,1 | 1,8 | 0,23 | 0,04 | 0,73 |
| 15,1 | 2,3 | 0,13 | 0,29 | 11,3 |
| 15,4 | 4,66 | 0,73 | 0,10 | 1,62 |
| 16,2 | 4,89 | 0,76 | 0,27 | 3,84 |

Aus der Tabelle 1 geht hervor, dass das überflüssige Abwaschen des unlöslichen Rückstands (die Verminderung des Cl-Anteils) vom beachtlichen Rückgang des Palladiumgehalts im hergestellten Produkt begleitet wird. Folglich nimmt auch seine Ausbringung ab.

### Beispiel 2

Der unlösliche Rückstand wurde geröstet. Nach der Kühlung und Zerkleinerung wurde er mittels einer 10%igen Lösung von Königswasser im Verhältnis von Feststoff : Flüssigkeit =1:4 4 ausgelaugt. Es wurde eine Trübe mit folgenden Anteilswerten erzeugt: KCI 43,9 g/dm³, NaCl 19,8 g/dm³, Pd 1,05 mg/dm³.

### Beispiel 3

Zwei Proben des unlöslichen Rückstands wurden unter gleichen Bedingungen wie in Beispiel 2 geröstet. Die Abbrände wurden abgewaschen, um die Chloride mittels Wassers zu entfernen und zwar im Verhältnis von Feststoff : Flüssigkeit =1:2 und Feststoff : Flüssigkeit = 1 : 3. Die erreichten Ergebnisse sind der Tabelle 2 zu entnehmen.

**Tabelle 2**

| | | | |
|---|---|---|---|
| Anteilswerte in der Waschlösung | | | |

| Feststoff : Flüssigkeit | Anteile in der Lösung | | |
|---|---|---|---|
| | Pd, mg/dm³ | KCI, g/dm³ | NaCl, g/dm³ |
| 1:3 | nicht festgestellt | 57,9 | 25,3 |
| 1:2 | nicht festgestellt | 84,0 | 37,1 |

Aus der Tabelle 2 geht hervor, dass beim Abwaschen kein Übergang von Palladium in die Lösung zustande kommt. Wegen der Hochtemperatureinwirkung beim Rösten zersetzt sich das Chlorid so, dass das Palladium in eine wasserlösliche Form wechselt. Das Gewicht des Abbrands verringert sich nach dem Abwaschen um 24 - 25 %. Die Konzentration von Palladium wurde in den betrachteten Proben ca. um das 1,3-fache höher.

Nach der Auslaugung des abgewaschenen Abbrands beim Feststoff : Flüssigkeits-Verhältnis = 1 : 2 enthielt die Lösung 3,0 g/dm³ KCI, 1,8 g/dm³ NaCl. Der Palladiumgehalt nahm bis 2,7 mg/dm³ zu.

Der technische Nutzeffekt des neuen Verfahrens zur Verarbeitung von mineralischen Rohstoffen, die Chloride der Alkali- und Erdalkalimetalle enthalten, besteht im Folgenden. Die Menge der bei der Auslaugung gebildeten Trüben nimmt ab. Dementsprechend vermindert sich der Umfang der für ihre Verarbeitung erforderlichen Hydrometallurgieausrüstung. Die Wirtschaftlichkeit des Vorgangs nimmt dagegen zu und der Anteil der ausgebrachten Edelmetalle wird wesentlich erhöht.

## Patentansprüche

1. Verfahren zur Verarbeitung von mineralischen Rohstoffen, welche Edelmetalle und Chloride von Alkalimetallen enthalten, einschließlich ihrer Aufbereitung und ihres Röstens,
**dadurch gekennzeichnet,**
**dass** die Verarbeitung des Abbrands in zwei Schritten durchgeführt wird, wobei im ersten Schritt eine sekundäre Aufbereitung mittels einer Wasserwäsche beim Verhältnis von Feststoff : Flüssigkeit = 1 : 0,7 - 2,5 vorgenommen wird und wobei im zweiten Schritt der abgewaschene Abbrand durch Salzsäure im Verhältnis von Feststoff : Flüssigkeit = 1 : 2 - 3 ausgelaugt wird.
